# EUROPEAN PATENT SPECIFICATION

(11) **EP 2 787 420 B1**
(45) Date of publication and mention of the grant of the patent: **02.05.2018**
(21) Application number: 14161476.8
(22) Date of filing: 25.03.2014
(51) Int. Cl.: G06F 1/16, G06F 3/041, G06F 3/045, G02F 1/1335

(54) **Touch display unit and method for manufacturing the same**
Berührungsempfindliche Anzeigeeinheit und Herstellungsverfahren dafür
Unité d'affichage tactile et son procédé de fabrication

(30) Priority: 01.04.2013 KR 20130035345
(43) Date of publication of application: 08.10.2014
(73) Proprietor: LG Electronics, Inc., Seoul 150-721 (KR)
(72) Inventor: Park, Joodo, 137-893 Seoul (KR); Jeon, Seongman, 137-893 Seoul (KR); Kim, Yongdae, 137-893 Seoul (KR); Kim, Donghyun, 137-893 Seoul (KR)
(74) Representative: Cabinet Plasseraud

(56) References cited:
- US-A1- 2010 075 114
- US-A1- 2012 241 198

## Description

### BACKGROUND OF THE DISCLOSURE

### 1. Field of the Disclosure

The present disclosure relates to a touch display unit having a nano-sized concavo-convex pattern on one surface thereof, and a method for manufacturing the same.

### 2. Background of the Disclosure

Recently, an image display device has a touch screen function for inputting a signal using a user's finger, a pen, etc., rather than having an additional input device such as a keypad.

The touch screen function may be classified into a resistive type, a capacitive type, a surface acoustic wave (SAW) type, an infrared type, etc. according to a data detection method.

As a display device develops, research on a mobile display and a touch screen is actively ongoing. In order to output a screen more clearly and to enhance visibility, a material and a structure of a touch window is ongoing.

Recently, a display unit, which has an enhanced optical function by a method for depositing an electrode on a cover glass, or a structure to remove an air layer between an LCD and a touch panel, is being provided for enhanced transmittance or reflectivity. Light, emitted from the display unit for output of an image, is lost while passing through each structure of the touch panel.

Further, as an outer surface of the display device is formed of reinforcing glass used to sense a user's touch input and to display an image, light is reflected from the outer surface. This may lower visibility.

The document US 2012/241198 discloses a conductive element including a base having a first wavy surface, a second wavy surface, and a third wavy surface, a first layer provided on the first wavy surface and a second layer provided on the second wavy surface.

### SUMMARY OF THE DISCLOSURE

Therefore, an aspect of the detailed description is to provide a touch display unit having an enhanced visibility.

To achieve these and other advantages and in accordance with the purpose of this specification, as embodied and broadly described herein, there is provided a touch display unit according to claim 1 and a method according to claim 10. Further embodiments are described in dependent claims 2 to 9 and 11 to 14.

The present invention can have the following advantages.

Firstly, as the electrode layer is partially formed by the nano-sized concavo-convex structure, loss of light output from the display panel can be minimized.

Secondly, due to the concavo-convex structure, a reflection amount of light incident onto the touch window from outside can be minimized. This can allow an image to be output from the display panel more clearly.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1 is a front perspective view of a mobile terminal according to an embodiment of the present invention;
FIG. 2 is a rear perspective view of the mobile terminal of FIG. 1;
FIG. 3 is an exploded perspective view of the mobile terminal of FIG. 1;
FIG. 4 is an enlarged sectional view of a touch screen panel according to an embodiment of the present invention;
FIGS. 5A to 5D are conceptual views for explaining processes for forming nano-sized grooves on a base substrate;
FIGS. 6A to 6C are conceptual views for explaining processes for forming an electrode layer on a base substrate;
FIGS. 7A to 7H are conceptual views for explaining processes for forming a base substrate according to another embodiment of the present invention;
FIGS. 8a to 8H are conceptual views for explaining a touch window having a nano structure according to still another embodiment of the present invention;
FIGS. 9A to 9E are conceptual views for explaining processes for manufacturing a base substrate of a touch window according to still another embodiment of the present invention;
FIGS. 10A to 10E are conceptual views for explaining processes for manufacturing a base substrate of a touch window according to still another embodiment of the present invention;
FIGS. 11A to 11D are views for explaining processes for forming a base substrate according to another embodiment of the present invention; and
FIGS. 12A to 12C are conceptual views for explaining a structure of a touch window according to another embodiment of the present invention.

### DETAILED DESCRIPTION OF THE DISCLOSURE

The technical terms used in the present specification are set forth to mention specific embodiments of the present invention, and do not intend to define the scope of the present invention. As far as not being defined differently, all terms used herein including technical or scientific terms may have the same meaning as those generally understood by an ordinary person skilled in the art to which the present disclosure belongs to, and should not be construed in an excessively comprehensive meaning or an excessively restricted meaning. In addition, if a technical term used in the description of the present disclosure is an erroneous term that fails to clearly express the idea of the present disclosure, it should be replaced by a technical term that can be properly understood by the skilled person in the art. In addition, general terms used in the description of the present disclosure should be construed according to definitions in dictionaries or according to its front or rear context, and should not be construed to have an excessively restrained meaning.

A singular representation may include a plural representation as far as it represents a definitely different meaning from the context. Terms 'include' or 'has' used herein should be understood that they are intended to indicate an existence of several components or several steps, disclosed in the specification, and it may also be understood that part of the components or steps may not be included or additional components or steps may further be included.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

Preferred embodiments of the present invention will be described below in detail with reference to the accompanying drawings where those components are rendered the same reference number that are the same or are in correspondence, regardless of the figure number, and redundant explanations are omitted.

In describing the present invention, if a detailed explanation for a related known function or construction is considered to unnecessarily divert the gist of the present invention, such explanation has been omitted but would be understood by those skilled in the art. The accompanying drawings are used to help easily understood the technical idea of the present invention and it should be understood that the idea of the present invention is not limited by the accompanying drawings.

A mobile terminal according to the present invention may include a smart phone, a laptop computer, a digital broadcasting terminal, a Personal Digital Assistant (PDA), a Portable Multimedia Player (PMP), a navigator, etc. However, it will be obvious to those skilled in the art that the present invention may be also applicable to a fixed terminal such as a digital TV, a desktop computer and other server, except for specific configurations for mobility.

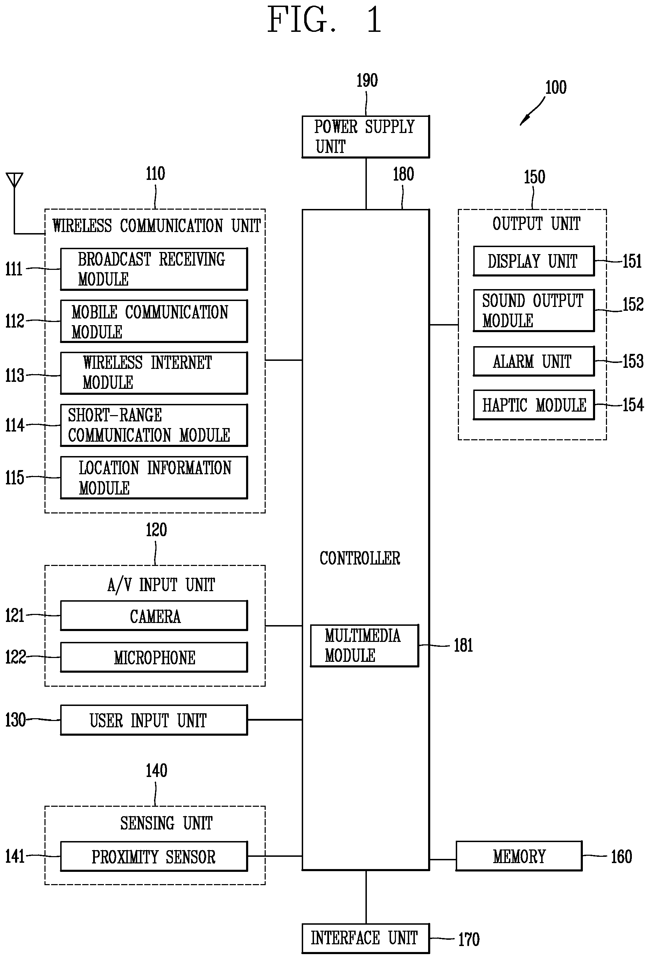

FIG.1 is a front perspective view of a mobile terminal according to an embodiment of the present invention.

A case (casing, housing, cover, etc.) forming an appearance of the mobile terminal 100 may include a front case 111 and a rear case 121. A space formed by the front case 111 and the rear case 121 may accommodate various components therein. At least one intermediate case may further be disposed between the front case 111 and the rear case 121. Such cases may be formed by injection-molded synthetic resin, or may be formed using a metallic material such as stainless steel (STS) or titanium (Ti).

At the front case 111, may be disposed a display unit 113, a first audio output unit 114, a first image input unit 115, a first manipulation unit 116, an audio input unit 117, etc.

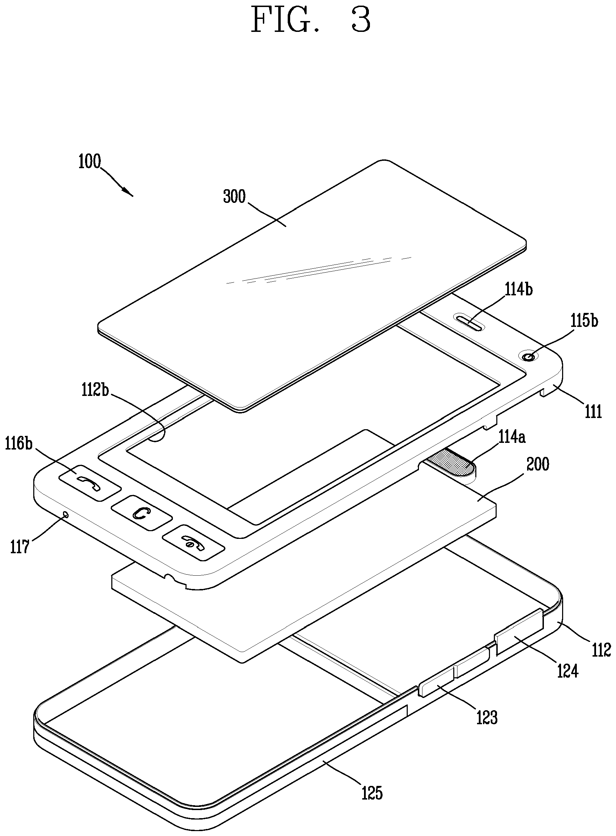

The display unit 113 includes a display panel 200 (refer to FIG. 3) for visually displaying information, such as a liquid crystal display (LCD) panel and an organic light emitting diodes (OLED) panel. The display unit 113 may be implemented as a touch screen, and may allow input of information by a user's touch.

The display unit 113 may further include a touch window 300 (refer to FIG. 3) for sensing a touch input applied onto the display panel 200.

The first audio output unit 114 may be implemented as a receiver or a speaker.

The first image input unit 115 may be implemented as a camera module for capturing a still image or a moving image by a user, etc.

The first manipulation unit 116 is configured to receive a command for controlling an operation of the mobile terminal 100 according to an embodiment of the present invention.

The audio input unit 117 may be implemented as a microphone for input of a user's voice, other sound, etc.

At the rear case 121 mounted to a rear surface of the mobile terminal 100, ma be disposed a second manipulation unit 123, an interface unit 124, a power supply unit 125, etc.

The second manipulation unit 123 may be installed on a side surface of the rear case 121. The first manipulation unit 116 and the second manipulation unit 123 may be referred to as manipulating portions, and may include any type of ones that can be manipulated in a user's tactile manner. For instance, the manipulation unit may be implemented as a dome switch, a touch screen or a touch pad for inputting a command or information by a user's push or touch. Alternatively, the manipulation unit may be implemented as a jog wheel or a jog switch.

The first manipulation unit 116 may be used to input commands such as START and END, and the second manipulation unit 123 may be operated as a hot key for performing a specific function rather than a scroll function, e.g., activation of the first image input unit 115. Phone numbers, characters, etc. may be input to a touch screen provided at the display unit 113.

The interface unit 124 serves as a passage through which the mobile terminal 100 exchanges data with an external device. For instance, the interface unit 124 may include at least one of a connection port for connecting an earphone by wire or wirelessly, a port for short range communication (e.g., infrared ray port (IrDA port)), a Bluetooth port, a wireless LAN port, and a power supply port for supplying power to the mobile terminal 100. The interface unit 124 may be a user identity module (UIM), a subscriber identity module (SIM), or a card socket for accommodating an external card such as a memory card.

The power supply unit 125 for supplying power to the mobile terminal 100 is mounted to the rear case 121. The power supply unit 125 may be detachably mounted to the rear case 121 as a charging battery.

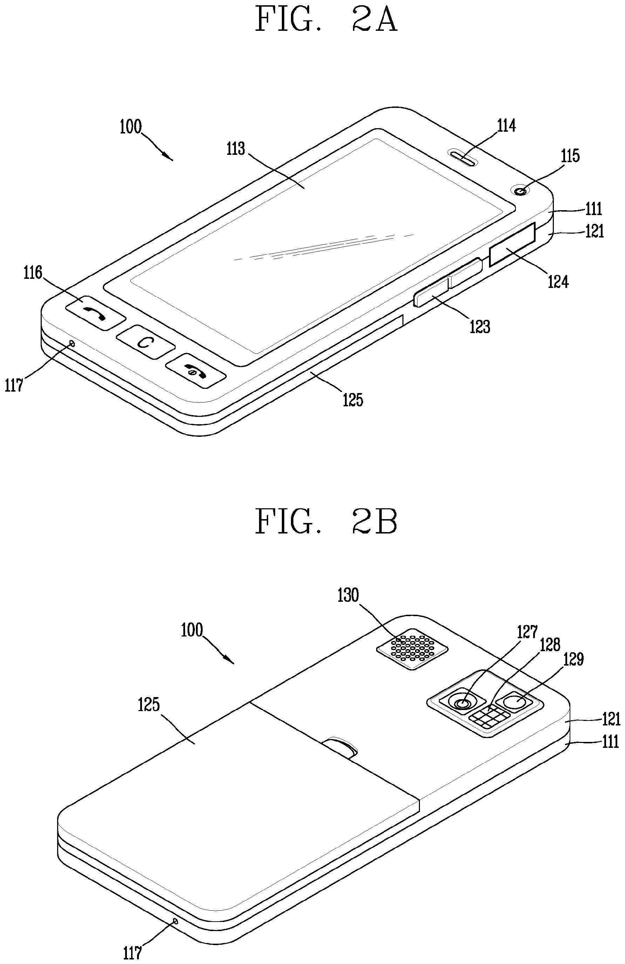

FIG. 2 is a rear perspective view of the mobile terminal 100 of FIG. 1.

Referring to FIG. 2, a second image input unit 127, a second audio output unit 130, etc. may be additionally arranged at the rear case 121.

The second image input unit 127 may have an image capturing direction, which is substantially opposite to that of the first image input unit 115 (refer to FIG. 1), and may have a different number of pixels from that of the first image input unit 115. For example, it is preferable that the first image input unit 115 has a relatively small number of pixels enough not to cause difficulty when the user captures his or her own face and sends it to the other party during a video call or the like, and the second image input unit 127 has a relatively large number of pixels since the user often captures a general object that is not sent immediately.

Furthermore, a flash 128 and a mirror 129 may be additionally disposed close to the second image input unit 127. The flash 128 illuminates light toward an object when capturing the object with the second image input unit 127. The mirror 129 allows a user to look at his or her own face, or the like, in a reflected way when capturing himself or herself (in a self-portrait mode) by using the second image input unit 127.

The second audio output unit 130 can implement a stereo function together with the first audio output unit 114 (refer to FIG. 1), and may be also used to implement a speaker phone mode during a phone call.

An antenna 131 for receiving broadcast signals may be disposed at one side of the rear case 121, separately from an antenna for making a phone call or the like. The antenna 131 may be provided in the rear case 121 in a retractable manner.

In the above descriptions, the first manipulation unit 116, etc. are formed at the front case 111, and the second manipulation unit 123, etc. are formed at the rear case 121. However, the present invention is not limited to this. For instance, the second manipulation unit 123 may be arranged at the front case 111 close to the first manipulation unit 116. Further, the second image input unit 127 may not be additionally provided. In this case, the first image input unit 115 may be rotatably formed, and may be configured to further capture a capturing direction of the second image input unit 127.

FIG. 3 is an exploded perspective view of the mobile terminal 100 of FIG. 1.

Referring to FIG. 3, the touch window 300 is formed to cover one surface of the front case 111. The touch window 300 covers one surface of the display panel 200 so that visual information output from the display module 200 can be recognized from outside. The display panel 200 and the touch window 300 constitute the display unit 113 (refer to FIG. 1).

The touch window 300 is formed to recognize a user's touch input, and information (commands, signals, etc.) can be input to the touch window 300.

The touch window 300 may have an area corresponding to the display module 200, and may be formed of a transmissive material. The touch window 300 may have an opaque region where light is not transmissive or an optical transmittance of light is very low. For instance, the touch window 300 may be surface-processed along the edge thereof so that light cannot pass therethrough.

A manipulation pad may be formed at the front case 111 in correspondence to the first manipulation unit 116. The manipulation pad is touched or pressed by a user. The manipulation pad may be formed at part of the touch window 300 as a manipulation region.

A sound hole 114b, a window hole 112b, and a transmissive window may be formed at the front case 111.

The sound hole 114 is formed to correspond to the first audio output unit 114, and is configured to emit a sound of the mobile terminal (e. g, bell sound, music, etc.) to be emitted to outside therethrough. The window hole 112b is formed to correspond to the display unit 113. The transmissive window formed of a light transmissive material may be formed to correspond to the first image input unit 115 (refer to FIG. 1).

The display panel 200, a speaker module 114a, a camera module 115a, a switch, etc. may be mounted to the rear case 121.

In the present invention, at least one region of the display unit 116 includes a nano-patterned structure. Hereinafter, a detailed structure of the display unit 116, and a method for manufacturing the same will be explained.

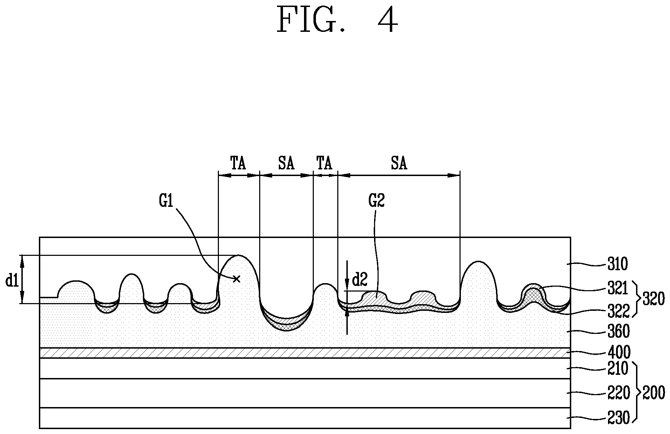

FIG. 4 is an enlarged sectional view of a touch screen panel according to an embodiment of the present invention.

Referring to FIG. 4, the touch window 300 may include a base substrate 310, an electrode layer 320, a filling material 360, an adhesive film 330, and a display panel 200.

The display panel 200 includes a backlight unit 230 configured to emit light toward the base substrate 310, a color filter panel 220 configured to output light of a plurality of colors using light emitted from the backlight unit 230, and one or more polarizing plate 210 configured to polarize the light. That is, the touch window according to this embodiment may be integrally formed with a display panel for outputting an image.

However, the present invention is not limited to this. That is, the touch window may be implemented as a touch panel for sensing a user's touch, and a display panel for outputting an image are assembled to each other.

The display panel is formed below a touch sensor, and light emitted from the display panel is provided to a user through the touch sensor. The display panel 200 is attached to the touch sensor by the adhesive film 330.

A first surface of the base substrate 310 is applied with a user's touch input. One surface of the glass substrate 301 may be formed to be exposed to outside of the mobile terminal. The base substrate may be formed of reinforcing glass, and is implemented as an integral type touch window of a cover glass and a touch panel.

A second surface of the base substrate 310, which is opposite to the first surface, is provided with a concavo-convex structure. The electrode layer 320 is formed on the second surface. That is, a plurality of grooves (G) are formed on the second surface. The plurality of grooves (G) may be formed to have different depths, and may be formed in an irregular manner. A sectional surface of the groove may have various shapes.

Referring to FIG. 4, a first groove (G1) and a second groove (G2) among the plurality of grooves (G) are formed to have a first depth (d1) and a second depth (d2), respectively. The first depth (d1) may be formed to be larger than the second depth (d2). For instance, the depth may be within the range of about 129 mn ∼ 228 nm. The grooves (G) are formed to have a nano-sized depth. The grooves (G) may be also formed to have a nano-sized diameter.

The electrode layer 320 includes a first electrode 321 and a second electrode 322. The first electrode 321 is partially formed on the second surface where the plurality of grooves (G) are formed. That is, regions on the second surface, where the second electrode 322 is formed, may be defined as sensing regions (SA). And regions on the second surface, where the second electrode 322 is not formed, may be defined as open regions (TA). That is, the touch screen panel is defined as the sensing regions (SA) for sensing a user's touch input, and the open regions (TA) except for the sensing regions (SA).

The second electrode 322 may be formed on the display panel 200. However, the present invention is not limited to this. For instance, the second electrode 322 may be formed on an insulating layer formed on the first electrode 321.

The open region (TA) may be formed to have a nano size, and may correspond to at least one of the plurality of grooves. That is, the first electrode 321 may not be formed on the region where the grooves (G) are formed. Light, provided from the backlight in the open region (TA) of the touch window 300, may directly reach the base substrate 310 without passing through the electrode layer 320. Then the light may be emitted to outside through the base substrate 310. Part of light emitted from the display panel 200 is provided to a user without passing through the electrode layer 320. This can reduce the amount of light to be lost.

As the open region (TA) is also formed to have a nano size, resistance of the electrode layer 320 for sensing a touch is minimized.

The electrode layer 320 is formed of a transparent transparent adhesive film (ITO thin film). That is, the electrode layer 320 is formed at the sensing regions (SA), and the light is emitted to outside through the electrode layer 320 in the sensing regions (SA).

The electrode layer 320 is formed on the second surface in an irregular manner. That is, the touch window 300 includes a plurality of sensing regions (SA) and a plurality of open regions (TA). The plurality of sensing regions (SA) and the plurality of open regions (TA) may be formed to have different areas.

The electrode layer 320 may be formed of a transparent conductive material, and may be formed of at least one of indium tin oxide (ITO), indium zinc oxide (IZO), zinc oxide (ZnO) and cadmium tin oxide (CTO). In this embodiment, the electrode layer 320 of the touch window 300 includes a first electrode 321 and a second electrode 322. The first electrode 321 and the second electrode 322 may be implemented as electrode lines formed in X and Y axes perpendicular to each other. The first electrode 321 may be formed on the base substrate 310, and the second electrode 322 may be formed on the base substrate 310 where the first electrode 321 has been formed. Although not shown, an insulating member is formed at an intersection between the first electrode 321 and the second electrode 322.

The electrode layer 320 may be deposited on the base substrate 310 by at least one of sputtering, evaporation, atomic layer deposition (ALD).

The filling material 360 is formed on the base substrate 310 and the electrode layer 320. The filling material 360 and the display panel 200 are adhered to each other by the adhesive film 330 (OCA). Due to the filling material 360, the flat display panel 200 can be easily attached to the base substrate 310 where the electrode layer 320 has been formed.

An air layer, rather than the filling material 360, may be formed between the touch window 300 and the display panel 200. In the case where the filling material 360 is formed, reflectivity due to a difference of refractive indexes between the air layer and the display panel can be reduced.

That is, a MOTHEYE phenomenon may occur due to the nano-sized concavo-convex pattern. More specifically, an air layer is formed by the nano-sized grooves, and a refractivity index between external air and the glass substrate is gradually decreased. Reflectivity of light can be minimized by minimizing a change of a refractive index of light passing through the glass substrate.

Hereinafter, a method for manufacturing a touch window including the nano-sized grooves will be explained.

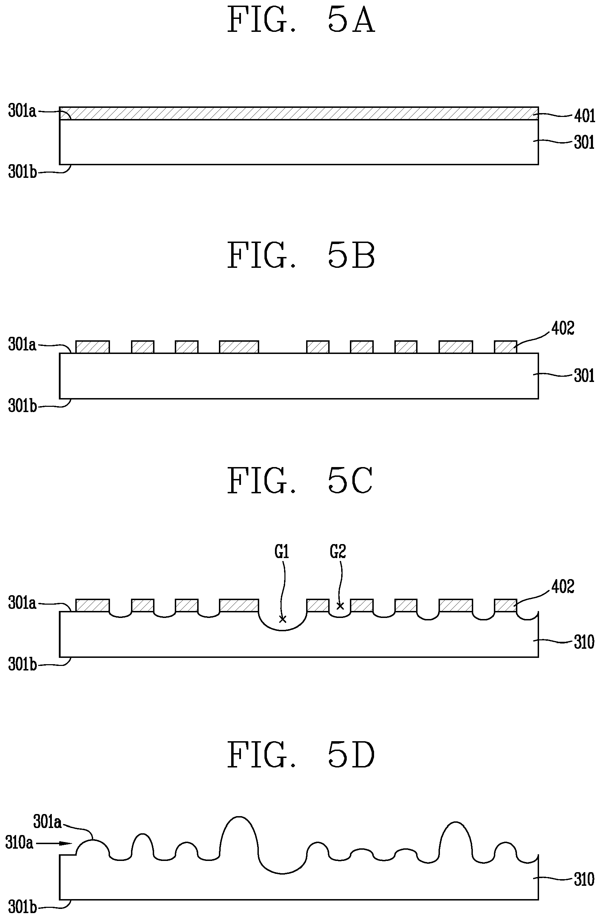

FIGS. 5A to 5D are conceptual views for explaining processes for forming nano-sized grooves on a base substrate.

Firstly, the surface of a glass substrate 301 is washed. The glass substrate 301 includes a first surface 301a and a second surface 301b facing each other. The glass substrate 301 may be formed to include at least one of soda lime glass, lead alkali glass, boro-silicate glass, quartz glass and lithium aluminum silicate glass. The base substrate 310 includes a first surface and a second surface facing each other.

A metallic layer 401 is deposited on the first surface 301a of the base substrate 310.

The metallic layer 401 is formed to have a thickness of several tens of nm or less.

The metallic layer 401 may be formed of silver (Ag), gold (Au), platinum (Pt), copper (Cu), etc.

Heat is applied to the glass substrate 301 where the metallic layer 401 has been formed. Then deposited metallic layer 401 is thermally-processed. The deposited metallic layer 401 may undergo an annealing process. Generally, precious metal has a tendency to cohere at a high temperature. Accordingly, if the metallic layer 401 is thermally-processed, the metallic layer 401 starts to cohere. Under such principle, the metallic layer 401 is formed as a metallic mask 402 having a size large enough to form a nano structure on the glass substrate 301. That is, the metallic layer 401 may cohere in a nano size.

The metallic layer 401 may be thermally-processed at a high temperature by a heat treatment device such as a field-enhanced rapid thermal annealer (RTA) or a furnace. For instance, the high temperature may be within the range of 150°C- 600°C. Preferably, the high temperature may be within the range of 150°C- 400°C. The glass substrate 301 may be thermally-processed in a chamber of a heat treatment device. As surface energy increases on a surface and an interface of the glass substrate 301 due to a heat effect, metallic particles cohere.

The metallic particles are different from one another in size and shape, and are arranged irregularly. Preferably, the metallic particles are formed to have a size and a pitch of at least a wavelength of visible rays.

In a state where the metallic particles have been formed on the glass substrate 301, the first surface 301a of the glass substrate 301 is partially etched. That is, the metallic particles are formed as a metallic mask for preventing part of the first surface 301a from being etched during the etching process.

The etching process may be a wet etching process. Preferably, an etching depth is about 50 nm or more. The grooves (G, refer to FIG. 4) are formed on one surface of the glass substrate 301 which is not covered by the metallic mask. Regions on the glass substrate 310 not covered by the metallic particles, as well as the regions on the glass substrate 310 covered by the metallic particles have irregular sizes. As a result, the grooves (G) formed during the etching process also have an irregular structure.

As the metallic particles are formed to have different heights, the grooves (G) may be also formed to have different depths. For instance, a groove (G1), which is relatively deeper and wider, may be formed through an etching process, at a wide region between the metallic particles. A groove (G2), which is relatively shallower and narrower, may be formed through the etching process, at a narrow region between the metallic particles. If the region between the metallic particles is narrow, the groove (G) may not be formed.

After the groove (G) has been formed, the metallic particles are removed. Upon removal of the metallic particles, the base substrate 310 including a nano-sized structure is formed on the first surface 301a.

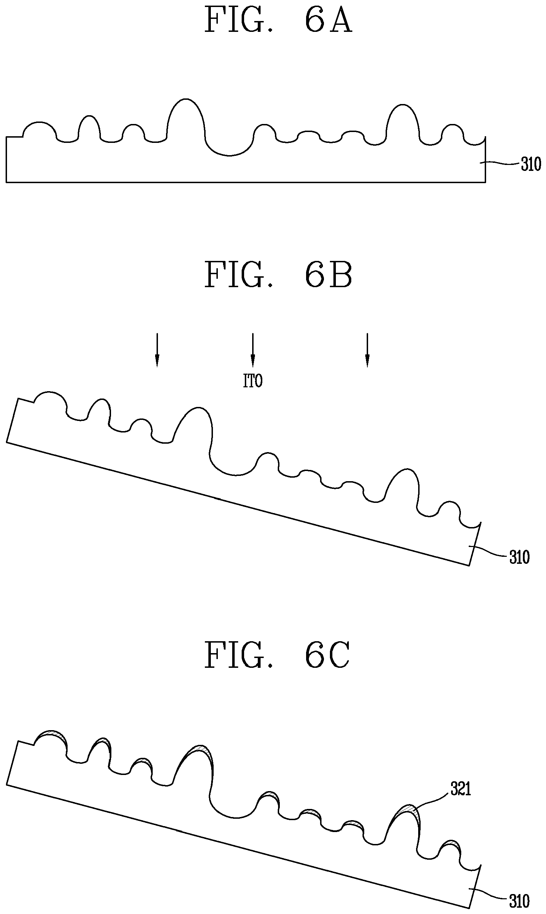

FIGS. 6A to 6C are conceptual views for explaining processes for forming an electrode layer on the base substrate.

Processes for forming the electrode layer 320 on the base substrate 310 including the nano-sized structure will be explained with reference to FIGS. 6A to 6C.

The electrode layer 320 is formed on the base substrate 310 by at least one of sputtering, evaporation, atomic layer deposition (ALD). A device, configured to form the electrode layer 320 by said one or more methods, provides a material of the electrode layer 320 in a preset direction (D1) toward the base substrate 310. For instance, in case of a plasma sputtering method, conductive particles are formed on the base substrate 310 using plasma particles emitted in a straight direction.

As the conductive layer, a transparent conductive material such as ITO or IZO may be used. The conductive layer may be formed to have a thickness of 1,200Å∼1,600Å.

The base substrate 310 is mounted with a preset angle. Although not shown, the base substrate 310 is fixed in a chamber of a sputtering device, with a preset angle with respect to the direction (D1). Accordingly, the conductive particles may not be formed between the grooves (G). That is, the groove (G) covered by a protruded region is defined as an open region (TA) where the conductive layer is not formed.

The electrode layer 320 may be formed to cover at least one groove (G). For instance, the electrode layer may be formed at the groove (G) according to a depth of the groove (G) and an angle between the preset direction (D1) and the base substrate 310.

The electrode layer 320 may be formed on the base substrate 310 in an irregular manner. A size of the open region (TA), a size of the sensing region (SA), and a thickness of the electrode layer 320 at each region may not be uniform.

Referring to FIG. 4, the second electrode 322 may be formed on the first electrode 321 which has been formed on the base substrate 310. The first electrode 321 and the second electrode 322 may be implemented as electrode lines formed in X and Y axes perpendicular to each other, and configured to sense a user's touch. The method for manufacturing a touch window may further include a step of forming an insulating member between the first electrode 321 and the second electrode 322, the insulating member configured to insulate the first electrode 321 and the second electrode 322 from each other.

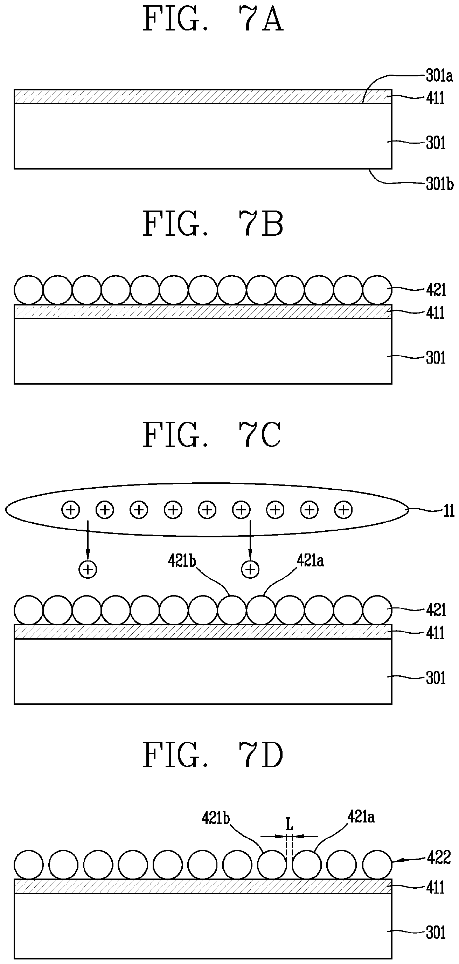

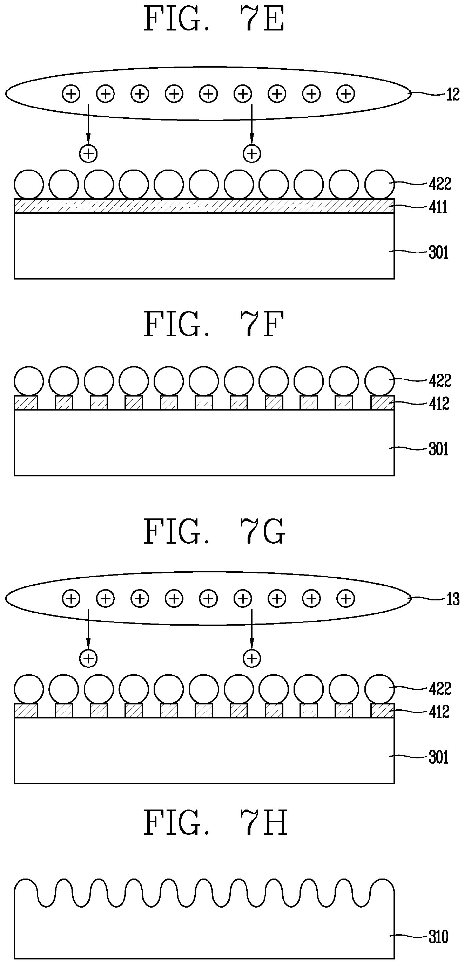

FIGS. 7A to 7H are conceptual views for explaining processes for forming a base substrate according to another embodiment of the present invention.

Firstly, the glass substrate 301 is washed. A metallic layer 411 is deposited on the first surface 301a of the glass substrate 301. For instance, the metallic layer 411 may be a film formed of chrome (Cr). Alternatively, the metallic layer 411 may be a thin film formed of chrome or chrome metal. Accordingly, a chrome layer is formed on the first surface

The first surface 301a, where the chrome layer 411 has been formed, undergoes a hydrophilic surface process.

Next, beads 421 are coated on the first surface 301a of the glass substrate 301. The beads 421 may be coated on the metallic layer 411 as a monolayer. The beads 421 may be nano beads formed of a polymer material.

The beads 421 may be polystyrene beads. The polystyrene beads 421 may have a nano size. For instance, the polystyrene bead 421 may be a sphere having a diameter of 100 nm. The polystyrene beads 421 may be coated on the metallic layer 411 as a monolayer.

The beads 421 may be coated on the glass substrate 301 by using at least one of a spin-coating method and a spray-coating method. The polystyrene beads 421 may be coated on the chrome layer as a monolayer, by using at least one of a spin-coating method and a spray-coating method.

The polystyrene beads 421 are etched by an oxygen (O₂) plasma 11, and the polystyrene beads 421 are spaced from each other by the oxygen plasma 11. That is, an interval between the polystyrene beads 421 is controlled by the oxygen plasma 11.

The polystyrene beads 421 are changed into a bead mask 422. That is, the beads 421 are implemented as a bead mask 422 having an interval (L) between the bead 421a and the bead 421b.

The metallic layer 411 is etched by a plasma 12. The plasma 12 may be formed of one of chlorine (Cl₂), oxygen (O₂) and argon (Ar), or may be mixture gas including at least two among chlorine (Cl₂), oxygen (O₂) and argon (Ar). For instance, the plasma 12 may be a chlorine plasma.

The metallic layer 411 is patterned by using the bead mask 422. As the bead mask 422 has a nano structure, the bead mask 422 may be used as a primary mask for nano-patterning of the metallic layer 411. By the plasma 12, the bead mask is transferred onto the metallic layer 411 in the form of dots, and the metallic layer 411 is etched.

As a result, the metallic layer 411 is changed into a metallic mask 412 in the form of dots. For instance, if the metallic layer 411 is a chrome thin film, the chrome thin film is changed into a chrome mask 412 in the form of dots. The chrome mask has a nano size of in the form of metallic points. That is, the chrome mask is composed of nano particles. The metallic mask 412 and the bead mask 422 serve as a double-layer mask.

The surface of the glass substrate 301 is etched. The surface of the base substrate 310 may be etched by using gas 13. As the gas for etching the base substrate 310, may be used at least one among fluorine-based CF₄, C₄F₈ and CHF₃, mixed gas of fluorine-based CF₄, C₄F₈ and CHF₃, or mixed gas between fluorine-based gas and additive gas. The additive gas may serve to activate an ion density of a plasma, and HF components. For instance, the additive gas may include at least one of O₂ and H₂.

The surface of the glass substrate 301 is etched by using the metallic mask 412. As the metallic mask 412 has a nano structure, the surface of the glass substrate 301 is etched into a nano structure. As a result, the glass substrate 301 having a nano structure is formed.

The surface of the glass substrate 301 having a nano structure is washed. The surface of the glass substrate 301 may be washed by an acid-based etching solution. A metallic material remaining on the glass substrate 301 may be removed by the etching solution. The etching solution may include at least one of hydrochloric acid, nitric acid, hydrogen peroxide and ammonia. That is, the surface of the glass substrate 301 having a nano structure may be washed by using at least one hydrochloric acid, nitric acid, hydrogen peroxide and ammonia. As a result, a metallic material remaining on the glass substrate 301 (e.g., chrome residues) may be etched, and a washing effect of the glass substrate 301 may be obtained.

A nano structure is formed on one surface of the base substrate 310. Grooves of the nano structure may be etched by gas 106 having passed through a gap between metallic particles of the metallic mask 412.

Through matching between a refractive index of the touch window and a refractive index of the display panel under the nano structure, the base substrate 310 manufactured by the method for manufacturing a display according to the present invention implements low reflection and high transmittance, without additionally using an anti reflective (AR) coating film. A display adopting the base substrate 310 of the present invention as a cover glass has excellent visibility.

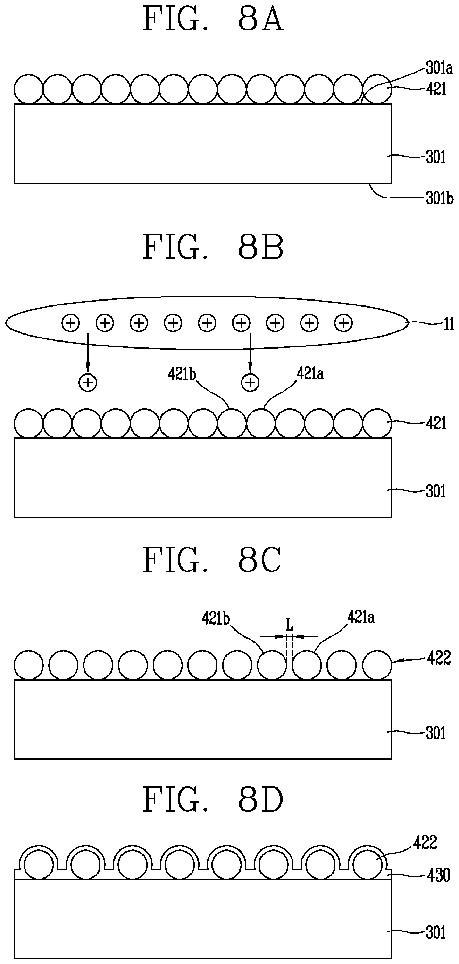

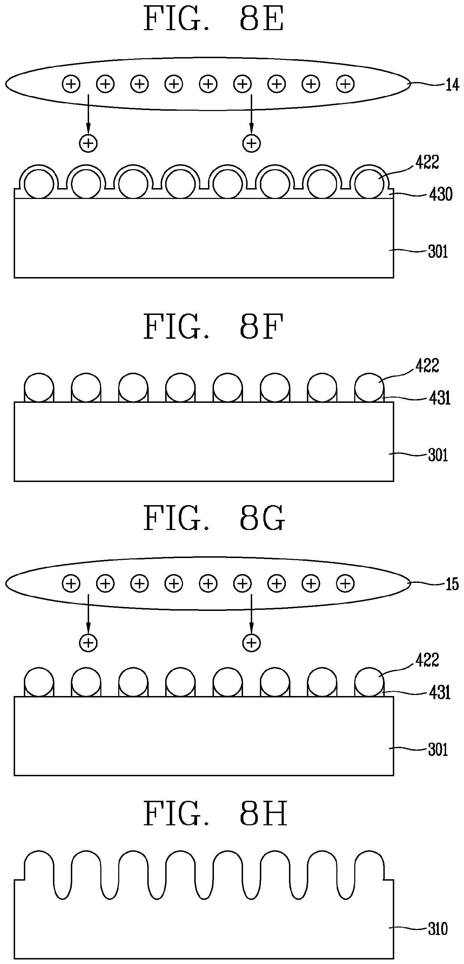

FIGS. 8a to 8E are conceptual views for explaining a touch window having a nano structure according to still another embodiment of the present invention.

Firstly, the surface of a glass substrate 301 is washed. The glass substrate 301 is composed of a first surface 301a and a second surface 301b facing each other. The glass substrate 301 may be formed of at least one of soda lime glass, lead alkali glass, boro-silicate glass, quartz glass and lithium aluminum silicate glass.

Beads 421 are coated on the first surface 301a of the glass substrate 301. The beads 421 may be coated on the glass substrate 301 as a monolayer. The beads 421 may be nano beads formed of a polymer material.

The beads 421 may be polystyrene beads. The polystyrene beads 421 may have a nano size. For instance, the polystyrene beads 421 may be spheres having a diameter of 100 nm. The polystyrene beads 421 may be coated on the glass substrate 301 as a monolayer.

The polystyrene beads 421 may be coated on the glass substrate 301 by using at least one of a spin-coating method and a spray-coating method. The polystyrene beads 421 may be coated on the glass substrate 301 as a monolayer, by using at least one of a spin-coating method and a spray-coating method.

Next, the polystyrene beads 421 are etched by an oxygen (O₂) plasma 11, and the polystyrene beads 421 are spaced from each other by the oxygen plasma 11. That is, an interval between the polystyrene bead 421a and the polystyrene bead 421b is controlled by the oxygen plasma 11.

The polystyrene beads 421 are changed into a bead mask 422. That is, the polystyrene beads 421 are implemented as a bead mask 422 having an interval (L) between the bead 421a and the bead 421b.

A metallic layer 430 is deposited on the first surface 301a of the glass substrate 301. The metallic layer 430 may be a film formed of chrome (Cr). Alternatively, the metallic layer 430 may be a chrome thin film, or a chrome metallic thin film. Chrome (Cr) may be deposited on the glass substrate 310, so that a chrome layer can be formed on the glass substrate 301 and the bead mask 422.

The metallic layer 430 is etched by a plasma 14. The plasma 14 may be formed of one of chlorine (Cl₂), oxygen (O₂) and argon (Ar), or may be mixed gas including at least two among chlorine (Cl₂), oxygen (O₂) and argon (Ar). For instance, the plasma 14 may be a chlorine plasma.

The metallic layer 430 is patterned by using the bead mask 422. As the bead mask 422 has a nano structure, the bead mask 422 may be used as a primary mask for nano-patterning the metallic layer 430. By the plasma 14, the bead mask is transferred onto the metallic layer 430 in the form of dots, and the metallic layer 430 is etched.

As a result, the metallic layer 430 is changed into a metallic mask 431 in the form of dots. For instance, if the metallic layer 430 is a chrome thin film, the chrome thin film is changed into a chrome mask in the form of dots. The chrome mask has a nano size in the form of points. That is, the chrome mask is composed of nano particles. The bead mask 422 and the metallic mask 431 serve as a double-layered mask.

The surface of the glass substrate 301 is etched. The surface of the glass substrate 301 may be etched by using gas 13. As the gas for etching the glass substrate 301, may be used one among fluorine-based CF₄, C₄F₈ and CHF₃, mixed gas including at least two among fluorine-based CF₄, C₄F₈ and CHF₃, or mixed gas between fluorine-based gas and additive gas. The additive gas may serve to activate an ion density of plasma, and HF components. For instance, the additive gas may include at least one of O₂ and H₂.

The surface of the glass substrate 301 is etched by using the metallic mask 431. As the metallic mask 431 has a nano structure, the surface of the glass substrate 301 is etched into a nano structure. As a result, a base substrate 310 having a nano structure is obtained.

The surface of the base substrate 310 is washed by an acid-based etching solution. A metallic layer remaining on the base substrate 310 may be removed by the acid-based etching solution. The etching solution may include at least one of hydrochloric acid, nitric acid, hydrogen peroxide and ammonia. That is, the surface of the base substrate 310 may be washed by using at least one of hydrochloric acid, nitric acid, hydrogen peroxide and ammonia. As a result, a metallic material remaining on the base substrate 310 (e.g., chrome residues) may be etched, and a washing effect of the base substrate 310 may be obtained.

A nano structure is formed on the base substrate 310. Grooves of the nano structure may be etched by gas 15 having passed through a gap between metallic particles of the metallic mask 431.

Through matching between a refractive index of the touch window and a refractive index of the display panel by the nano structure 208, the base substrate 310 manufactured by the method for manufacturing a touch display unit according to the present invention implements low reflection and high transmittance, without additionally using an anti reflective (AR) coating film. A display adopting the base substrate 310 of the present invention as a cover glass has excellent visibility.

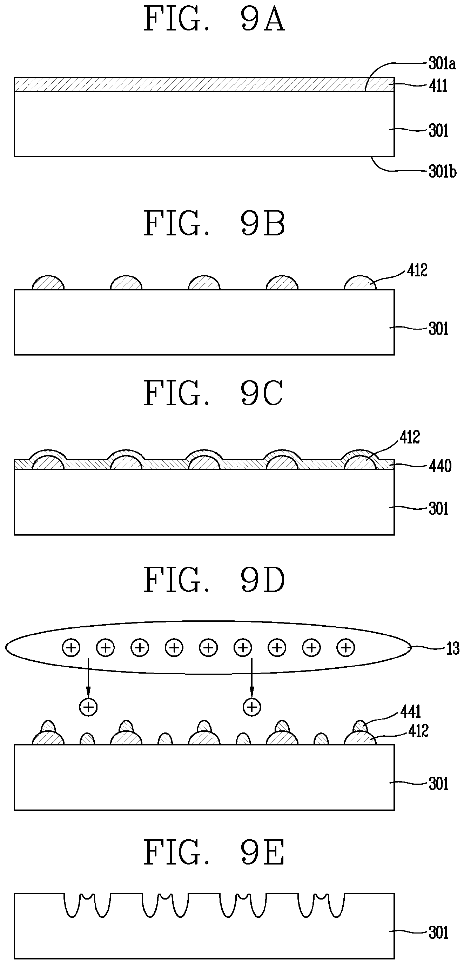

FIGS. 9A to 9E are conceptual views for explaining processes for manufacturing a base substrate of a touch window according to still another embodiment of the present invention.

Firstly, the glass substrate 301 is washed. A metallic layer 411 is deposited on the first surface 301a of the glass substrate 301. For instance, the metallic layer 411 may be a film formed of formed of chrome (Cr). Alternatively, the metallic layer 411 may be a thin film formed of chrome or chrome metal. Accordingly, a chrome layer is formed on the first surface 301a.

Heat is applied to the glass substrate 301 where the chrome layer 411 has been formed. The metallic layer 411 is cohered into a plurality of metallic particles on the first surface 301a. The metallic particles are different from one another in size and shape, and are arranged irregularly. Preferably, the metallic particles are formed to have a size and a pitch of at least a wavelength of visible rays. That is, the metallic layer 411 undergoes a primary annealing process.

The metallic particles serve as a metallic mask 412. A resin layer 440 is coated on the metallic mask 412 and the glass substrate 301.

The glass substrate 301 on which the resin layer 440 has been coated undergoes a secondary annealing process. As part of the resin layer 440 is removed by the secondary annealing process, the resin layer 440 is changed into a resin mask 441 composed of a plurality of resin pieces. That is, the metallic mask 412 and the resin mask 440 are formed on the first surface 301a. That is, a double-mask is formed on the glass substrate 301.

Then the first surface 301a of the glass substrate, where the double-mask has been formed, is etched. The first surface 301a may be etched by using gas 13. As the gas 13, may be used one among fluorine-based CF₄, C₄F₈ and CHF₃, mixed gas including at least two among fluorine-based CF₄, C₄F₈ and CHF₃, or mixed gas between fluorine-based gas and additive gas. The additive gas may serve to activate an ion density of plasma, and HF components. For instance, the additive gas may include at least one of O₂ and H₂.

The surface of the glass substrate 301 is etched by using the double-mask. As the resin mask 441 and the metallic mask 412 have a nano structure, the surface of the glass substrate 301 is etched into a nano structure.

The surface of the base substrate 310 having a nano structure is washed. The surface of the base substrate 310 may be washed by an acid-based etching solution.

A metallic material remaining on the base substrate 310 is removed by the acid-based etching solution. The etching solution may include at least one of hydrochloric acid, nitric acid, hydrogen peroxide and ammonia. That is, the surface of the base substrate 310 may be washed by using at least one of hydrochloric acid, nitric acid, hydrogen peroxide and ammonia. As a result, a metallic material remaining on the base substrate 310 (e.g., chrome residues) may be etched, and a washing effect of the base substrate 310 may be obtained.

In this embodiment, as a double-mask is used to etch the glass substrate 301, a more minute pattern can be formed. Further, as an etching phenomenon of the metallic mask 412 is reduced, a more precise nano-pattern can be formed on the glass substrate.

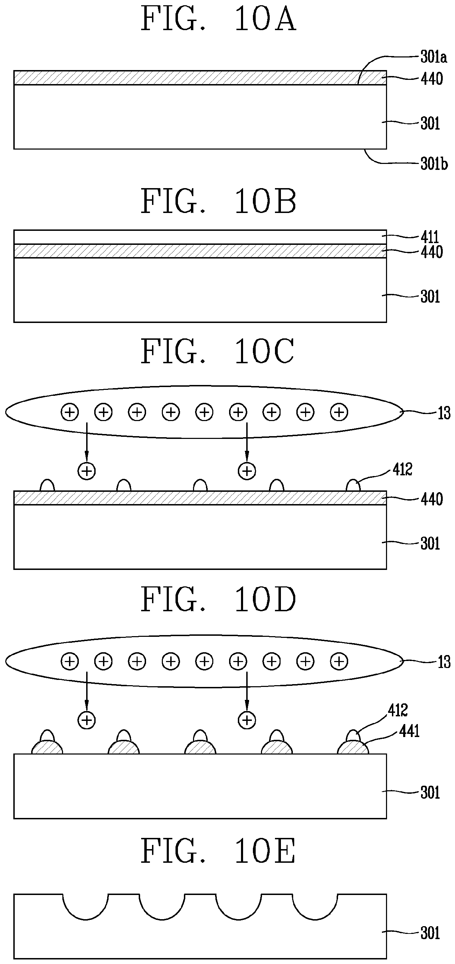

FIGS. 10A to 10E are conceptual views for explaining processes for manufacturing a base substrate of a touch window according to still another embodiment of the present invention.

Firstly, the glass substrate 301 is washed. A resin layer 440 is coated on the first surface 301a of the glass substrate 301. A metallic layer 411 is formed on the resin layer 440. The metallic layer 411 may be formed of silver (Ag) or chrome (Cr).

Heat is applied to the metallic layer 411 formed on the first surface 301a of the glass substrate 301, thereby forming a metallic mask 412. The metallic mask 412 is composed of a plurality of metallic pieces transformed by the heat.

In a state where the metallic mask 412 has been formed on the resin layer 440, the resin layer 440 is etched by using a plasma 14. The plasma 14 may be implemented as one of chlorine (Cl₂), oxygen (O₂) and argon (Ar), or may be implemented as mixture gas including at least two of chlorine (Cl₂), oxygen (O₂) and argon (Ar). For instance, the plasma 14 may be a chlorine plasma.

The resin mask 441 is formed by the metallic mask 412. The resin mask 441 is composed of a plurality of resin pieces formed at regions corresponding to the metallic mask 412.

The resin mask 441 and the metallic mask 412 form a double-mask. In a state where the double-mask has been formed on the first surface 301a, the glass substrate 310 is etched.

The first surface 301a may be etched by using the gas 13. As the gas 13, may be used one among fluorine-based CF₄, C₄F₈ and CHF₃, mixed gas including at least two among fluorine-based CF₄, C₄F₈ and CHF₃, or mixed gas between fluorine-based gas and additive gas. The additive gas may serve to activate an ion density of a plasma, and HF components. For instance, the additive gas may include at least one of O₂ and H₂.

The surface of the base substrate 310 may be washed by an acid-based etching solution. The metallic mask 412 may be removed by the etching solution.

The etching solution may include at least one of hydrochloric acid, nitric acid, hydrogen peroxide and ammonia. That is, the surface of the base substrate 310 may be washed by using at least one of hydrochloric acid, nitric acid, hydrogen peroxide and ammonia.

A nano structure is formed on the first surface of the base substrate 310. Grooves of the nano structure may be etched by the gas 13 having passed through a gap between metallic particles of the metallic mask 412.

In this embodiment, a nano-pattern can be formed in a more uniform manner, due to the double-mask.

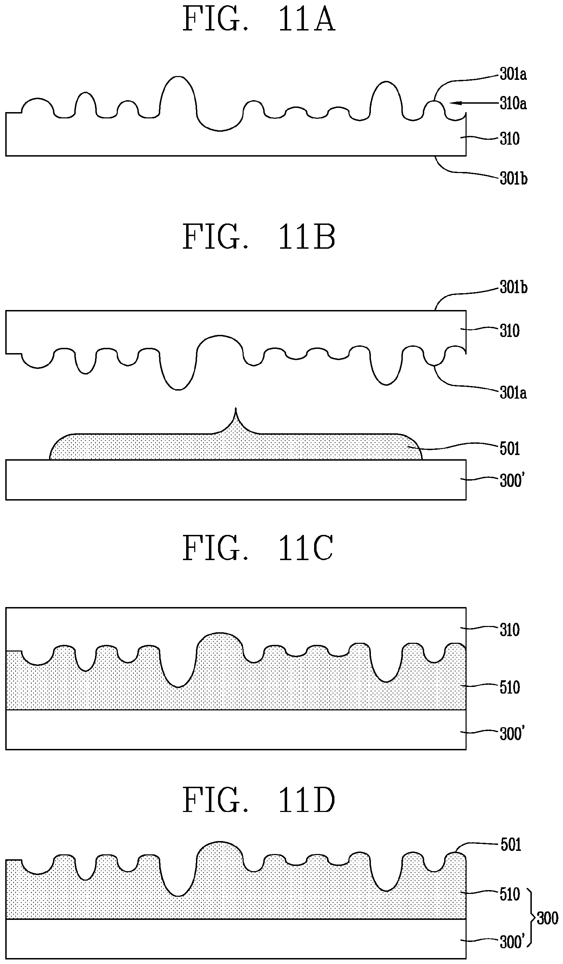

FIGS. 11A to 11D are views for explaining processes for forming a base substrate according to another embodiment of the present invention.

Firstly, formed is a base substrate 310 which has a first surface 301a and a second surface 301b, and which includes a concavo-convex portion 310a having a plurality of grooves (G, refer to FIG. 6) on the first surface 301a.

A molding member 501 is deposited on a cover glass 300'. The cover glass 300', where the molding member 501 has been formed, is arranged to face the first surface 301a of the base substrate 310. Then pressure is applied to the cover glass 300'.

Although not shown, when applying pressure to the cover glass 300', a metallic pattern, configured to support the cover glass 300' and to apply pressure to the cover glass 300' and the base substrate 310, may be used.

After pressure has been applied to the cover glass 300' and the base substrate 310, the base substrate 310 is removed from the cover glass 300'. A nano pattern, which corresponds to the concavo-convex portion 310a of the base substrate 310, may be formed at a molded layer 510 by the concavo-convex portion 310a. For instance, one surface of the molded layer 510 may be protruded to outside by a plurality of grooves of the concavo-convex portion 310a.

A molding member 510 having a nano -sized concavo-convex pattern may be formed on one surface of the cover glass 300'. The molding member may be formed of a transparent material which allows light to pass therethrough. Accordingly, light emitted from the display panel may be provided to a user through the cover glass 300' and the molding member 510 having a nano-sized concavo-convex nano pattern.

The electrode layer 320 may be formed on the concavo-convex layer 501.

A cover glass having a concavo-convex pattern substantially the same as the concavo-convex portion 310a may be manufactured by using the base substrate including the concavo-convex portion 310a and molding processes.

A single touch window may be formed by the processes of FIGS. 5A to 5D and the processes of FIGS. 6A to 6C. A concavo-convex structure may be formed on one surface of the base substrate. And a concavo-convex pattern may be formed on another surface of the base substrate, by using another base substrate having a concavo-convex pattern. That is, a concavo-convex structure may be formed on two surfaces of the base substrate, through different manufacturing processes.

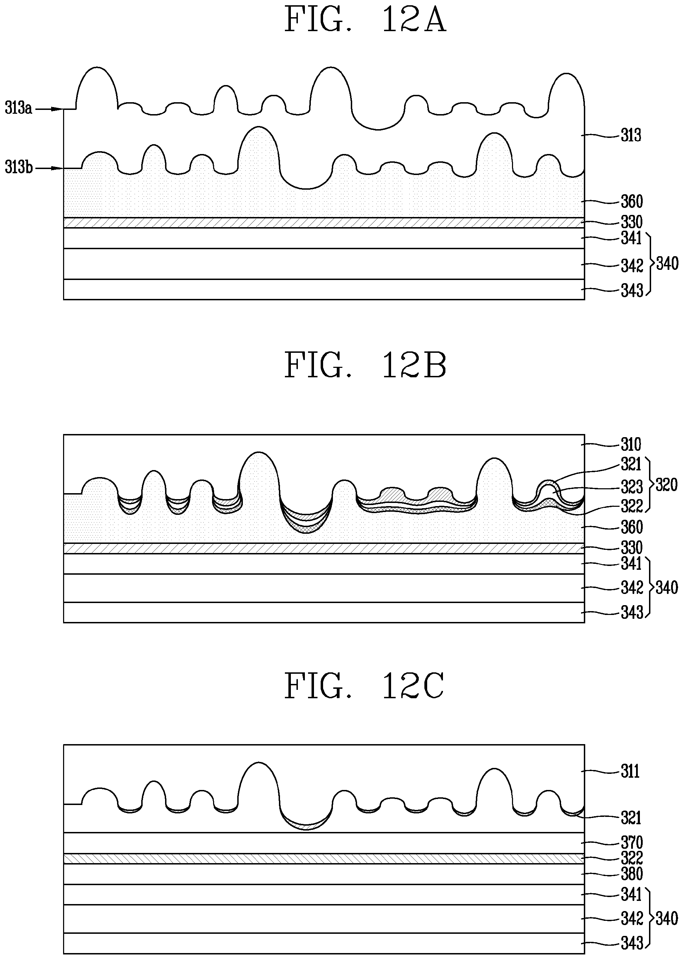

FIGS. 12A to 12C are conceptual views for explaining a structure of a touch window according to another embodiment of the present invention.

Referring to FIGS. 4 and 12A, a touch window 313 according to another embodiment of the present invention includes a first surface 313a and a second surface 313b. The first surface 313a and the second surface 313b form a concavo-convex structure including a plurality of nano-sized grooves.

Due to the concavo-convex structure formed on the first surface 313a, a reflection amount of light incident onto the touch window from outside can be minimized. In a case where the touch window is used at a bright place, light incident onto the touch window from outside is reflected from an outermost surface of the touch window. Due to such reflection, a user cannot precisely recognize an image output from a display panel.

In this embodiment, the concavo-convex structure is formed on an outer surface of the touch window, the outer surface onto which light is incident. Under such configuration, a change of a refractive index of light passing through the touch window is reduced, and thus reflectivity of light is reduced. As a user cannot easily recognize reflected light, a dazzling phenomenon can be minimized and an image output from the display panel can be more precisely recognized.

Although not shown, a fingerprint preventing film may be further formed on one surface of the cover glass 313, so as to prevent a fingerprint on the touch window 313 which forms the appearance of the mobile terminal.

Referring to FIG. 12B, a touch screen panel 300 may include a base substrate 310, an electrode layer 320, a filling material 360, an adhesive film 330 and a display panel 200. The touch screen panel 300 has the same configuration as the touch window of FIG. 4, except for the electrode layer 320. The same components are provided with the same reference numerals, and detailed explanations thereof will be omitted.

Referring to FIG. 12C, the electrode layer 320 includes a first electrode 321, a second electrode 322 and an insulating layer 323. The insulating layer 323 may be formed between the first electrode 321 and the second electrode 322. The insulating layer 323 is formed of an insulating material for insulating the first electrode 321 and the second electrode 322 from each other.

Preferably, the insulating layer 323 is formed on the first electrode 321 partially formed on the base substrate 310.

The touch window of FIG. 12C includes a base substrate 310, a first electrode 321, a transparent adhesive film 370, a second electrode 322, an ITO film 380 and a display panel 200.

The base substrate 310 according to this embodiment may be formed of an ITO film coating glass. The base substrate 310 is formed by depositing a transparent conductive metallic film (ITO, 321') on a glass substrate. As the grooves (G) are formed while the nano-sized concavo-convex structure is formed, the ITO film is partially removed. As a result, the open regions (TA) and the sensing regions (SA) may be defined by the coated ITO film.

A transparent adhesive filmtransparent adhesive film 370 (optically clear adhesive, OCA) is formed below the base substrate 310. An electrode layer 322' formed of an ITO film is formed below the transparent adhesive filmtransparent adhesive film 370. The electrode layer 322' is provided with no grooves.

A display panel 200 is formed below the electrode layer 322'.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A touch display unit, comprising:
a base substrate 310 having a first surface 310a to which a user's touch is applied, and a second surface 310b having a concavo-convex pattern of a plurality of grooves, wherein grooves are formed to have a nano-sized depth and a nano-sized diameter;
an electrode layer 320 formed on the second surface, having sensing regions for generating an electric signal corresponding to the user's touch, and having open regions corresponding to part of the plurality of grooves; and
a display panel 200 formed below the electrode layer, and providing light to the base substrate 310,
wherein the open regions are defined by protruded regions where the first electrode layer is not formed, **characterized in that**
the sensing regions include first electrode layer of the electrode layer, formed only on protruded regions of the concavo-convex pattern.

2. The touch display unit of claim 1, wherein the grooves are irregularly formed.

3. The touch display unit of claim 2, wherein the electrode layer includes:
a second electrode layer formed on the insulating member
an insulating member formed between the first and second electrode layers; and

4. The touch display unit of one of any claims 2 to 3, wherein the electrode layer includes:
a transparent adhesive film formed on the second surface of the base substrate; and
a second electrode layer formed on the transparent adhesive film, and forming an electric signal together with the first electrode layer.

5. The touch display unit of claim 2, wherein the first surface of the base substrate 310 includes a concavo-convex pattern having a plurality of grooves, in order to scatter light incident onto the base substrate 310 from outside.

6. The touch display unit of claim 5, further comprising a film on the first surface of the base substrate 310 so as to prevent foreign materials from being introduced into the base substrate 310, the first surface exposed to outside.

7. The touch display unit of claim 1, wherein the base substrate 310 includes:
a glass substrate ; and
a concavo-convex layer 501 formed of a molding member, having one surface attached to one side of the glass substrate, and having another surface on which a concavo-convex portion having the concavo-convex pattern is formed.

8. The touch display unit of claim 7, wherein the glass substrate has grooves formed on another surface of the glass substrate corresponding to the concavo-convex pattern, and.
wherein grooves formed on another surface of the glass substrate are formed to have a nano-sized depth and a nano-sized diameter.

9. The touch display unit of claim 1, wherein the electrode layer includes:
a second electrode 322 formed on the display panel, and configured to sense a user's touch together with the first electrode.

10. A method for manufacturing a touch display unit, the method comprising:
forming a nano mask having a nano-sized diameter on one surface of a glass substrate;
etching said one surface of the glass substrate by the nano mask, thereby forming a concavo-convex structure including a plurality of grooves;
removing the nano mask having the nano-sized diameter; and
forming an electrode layer 321' on said one surface of the glass substrate including the plurality of grooves, and
wherein the step of forming an electrode layer includes:
fixing the glass substrate with a preset inclination angle, based on a reference direction; and
forming an electrode layer on one surface of the glass substrate, by providing gas to the glass substrate in the reference direction.

11. The method of claim 10, wherein the step of forming a nano mask having a nano-sized diameter includes:
forming a metallic layer on one surface of the glass substrate; and
applying heat to the glass substrate where the metallic layer has been formed, cohering the metallic layer, thereby forming a nano mask having a nano-sized diameter composed of metallic pieces.

12. The method of claim 11, further comprising:
depositing a molding member on a cover glass;
arranging the glass substrate on the molding member such that one surface of the glass substrate faces the cover glass;
pressing the base substrate such that a concavo-convex structure is formed at the molding member by the grooves; and
removing the base substrate.

13. The method of claim 10, further comprising:
forming a metallic layer on another surface of the glass substrate;
applying heat to the glass substrate where the metallic layer has been formed, thereby cohering the metallic layer; and
forming a plurality of grooves on another surface of the glass substrate, by using a plurality of metallic pieces cohered by the heat, as a mask.

14. The method of claim 13, further comprising forming a film on another surface of the glass substrate, so as to prevent foreign materials from being introduced into the glass substrate.

## Patentansprüche

1. Berührungsempfindliche Anzeigeeinheit, welche Folgendes aufweist:
ein Basissubstrat 310 mit einer ersten Fläche 310a, worauf ein Benutzer eine Berührung anwendet, und einer zweiten Fläche 310b mit einem konkav-konvexen Muster aus mehreren Rillen, wobei die Rillen eine Tiefe und einen Durchmesser im Nanometerbereich aufweisen,
eine Elektrodenschicht 320, die auf der zweiten Fläche ausgebildet ist, Erfassungsbereiche zum Erzeugen eines der Berührung durch einen Benutzer entsprechenden elektrischen Signals aufweist und offene Bereiche, die einem Teil der mehreren Rillen entsprechen, aufweist, und
ein Anzeigefeld 200, das unterhalb der Elektrodenschicht ausgebildet ist und dem Basissubstrat 310 Licht bereitstellt,
wobei die offenen Bereiche durch vorstehende Bereiche definiert sind, in denen die erste Elektrodenschicht nicht ausgebildet ist,
**dadurch gekennzeichnet, dass**
die Erfassungsbereiche eine erste Elektrodenschicht der Elektrodenschicht aufweisen, die nur auf vorstehenden Bereichen des konkav-konvexen Musters ausgebildet ist.

2. Berührungsempfindliche Anzeigeeinheit nach Anspruch 1, wobei die Rillen unregelmäßig ausgebildet sind.

3. Berührungsempfindliche Anzeigeeinheit nach Anspruch 2, wobei die Elektrodenschicht Folgendes aufweist:
eine zweite Elektrodenschicht, die auf dem isolierenden Element ausgebildet ist,
ein isolierendes Element, das zwischen der ersten und der zweiten Elektrodenschicht ausgebildet ist, und

4. Berührungsempfindliche Anzeigeeinheit nach einem der Ansprüche 2 bis 3, wobei die Elektrodenschicht Folgendes aufweist:
einen transparenten Haftfilm, der auf der zweiten Fläche des Basissubstrats ausgebildet ist, und
eine zweite Elektrodenschicht, die auf dem transparenten Haftfilm ausgebildet ist und zusammen mit der ersten Elektrodenschicht ein elektrisches Signal bildet.

5. Berührungsempfindliche Anzeigeeinheit nach Anspruch 2, wobei die erste Fläche des Basissubstrats 310 ein konkavkonvexes Muster mit mehreren Rillen aufweist, um von außen auf das Basissubstrat 310 fallendes Licht zu streuen.

6. Berührungsempfindliche Anzeigeeinheit nach Anspruch 5, welche ferner einen Film auf der ersten Fläche des Basissubstrats 310 aufweist, um zu verhindern, dass Fremdmaterialien in das Basissubstrat 310 eingebracht werden, wobei die erste Fläche nach außen freisteht.

7. Berührungsempfindliche Anzeigeeinheit nach Anspruch 1, wobei das Basissubstrat 310 Folgendes aufweist:
ein Glassubstrat und
eine konkav-konvexe Schicht 501, die aus einem Formelement gebildet ist, das eine an einer Seite des Glassubstrats angebrachte Fläche und eine andere Fläche, auf der ein konkav-konvexer Abschnitt mit dem konkav-konvexen Muster ausgebildet ist, aufweist.

8. Berührungsempfindliche Anzeigeeinheit nach Anspruch 7, wobei das Glassubstrat Rillen aufweist, die auf einer anderen Fläche des Glassubstrats entsprechend dem konkav-konvexen Muster ausgebildet sind, und
wobei Rillen, die auf der anderen Fläche des Glassubstrats ausgebildet sind, eine Tiefe und einen Durchmesser im Nanometerbereich aufweisen.

9. Berührungsempfindliche Anzeigeeinheit nach Anspruch 1, wobei die Elektrodenschicht Folgendes aufweist:
eine zweite Elektrode 322, die auf dem Anzeigefeld ausgebildet ist und dafür ausgelegt ist, zusammen mit der ersten Elektrode eine Berührung durch einen Benutzer zu erfassen.

10. Verfahren zur Herstellung einer berührungsempfindlichen Anzeigeeinheit, wobei das Verfahren Folgendes aufweist:
Bilden einer Nanomaske mit einem Durchmesser im Nanometerbereich auf einer Fläche eines Glassubstrats,
Ätzen der einen Fläche des Glassubstrats durch die Nanomaske, um dadurch eine konkav-konvexe Struktur zu bilden, die mehrere Rillen aufweist,
Entfernen der Nanomaske mit dem Durchmesser im Nanometerbereich und
Bilden einer Elektrodenschicht 321' auf der einen Fläche des die mehreren Rillen aufweisenden Glassubstrats,
wobei der Schritt des Bildens einer Elektrodenschicht Folgendes aufweist:
Fixieren des Glassubstrats mit einem vorgegebenen Neigungswinkel auf der Grundlage einer Bezugsrichtung und
Bilden einer Elektrodenschicht auf einer Fläche des Glassubstrats, indem ein Gas in Bezugsrichtung auf das Glassubstrat einwirken gelassen wird.

11. Verfahren nach Anspruch 10, wobei der Schritt des Bildens einer Nanomaske mit einem Durchmesser im Nanometerbereich Folgendes aufweist:
Bilden einer metallischen Schicht auf einer Fläche des Glassubstrats und
Anwenden von Wärme auf das Glassubstrat, wo die metallische Schicht gebildet wurde, und dadurch Kohärieren der metallischen Schicht, um eine aus metallischen Stücken bestehende Nanomaske mit einem Durchmesser im Nanometerbereich zu bilden.

12. Verfahren nach Anspruch 11, welches ferner Folgendes aufweist:
Aufbringen eines Formelements auf ein Deckglas,
Anordnen des Glassubstrats auf dem Formelement, so dass eine Fläche des Glassubstrats dem Deckglas gegenübersteht,
Pressen des Basissubstrats, so dass eine konkav-konvexe Struktur am Formelement durch die Rillen gebildet wird, und
Entfernen des Basissubstrats.

13. Verfahren nach Anspruch 10, welches ferner Folgendes aufweist:
Bilden einer metallischen Schicht auf einer anderen Fläche des Glassubstrats,
Anwenden von Wärme auf das Glassubstrat, wo die metallische Schicht gebildet wurde, um die metallische Schicht dadurch zu kohärieren, und
Bilden mehrerer Rillen auf der anderen Fläche des Glassubstrats unter Verwendung mehrerer durch die Wärme kohärierter metallischer Stücke als Maske.

14. Verfahren nach Anspruch 13, wobei ferner ein Film auf der anderen Fläche des Glassubstrats gebildet wird, um zu verhindern, dass Fremdmaterialien in das Glassubstrat eingebracht werden.

## Revendications

1. Unité d'affichage tactile, comprenant :
un substrat de base 310 ayant une première surface 310a sur laquelle le toucher d'un utilisateur est appliqué, et une seconde surface 310b ayant un motif concavo-convexe d'une pluralité de rainures, dans lequel les rainures sont formées pour avoir une profondeur nano-dimensionnée et un diamètre nano-dimensionné ;
une couche d'électrode 320 formée sur la seconde surface, ayant des zones de détection destinées à générer un signal électrique correspondant au toucher de l'utilisateur, et ayant des zones ouvertes correspondant à une partie de la pluralité de rainures ; et
un panneau d'affichage 200 formé en-dessous de la couche d'électrode et fournissant une lumière au substrat de base 310,
dans laquelle les zones ouvertes sont définies par des zones en saillie où la première couche d'électrode n'est pas formée,
**caractérisée en ce que**
les zones de détection incluent une première couche d'électrode de la couche d'électrode, formée uniquement sur les zones en saillie du motif concavo-convexe.

2. Unité d'affichage tactile selon la revendication 1, dans laquelle les rainures sont formées de façon irrégulière.

3. Unité d'affichage tactile selon la revendication 2, dans laquelle la couche d'électrode inclut :
une seconde couche d'électrode formée sur l'élément isolant
un élément isolant formé entre les première et seconde couches d'électrode ; et

4. Unité d'affichage tactile selon l'une quelconque des revendications 2 à 3, dans laquelle la couche d'électrode inclut :
un film adhésif transparent formé sur la seconde surface du substrat de base ; et
une seconde couche d'électrode formée sur le film adhésif transparent, et formant un signal électrique conjointement avec la première couche d'électrode.

5. Unité d'affichage tactile selon la revendication 2, dans laquelle la première surface du substrat de base 310 inclut un motif concavo-convexe ayant une pluralité de rainures, afin de diffuser la lumière incidente sur le substrat de base 310 depuis l'extérieur.

6. Unité d'affichage tactile selon la revendication 5, comprenant en outre un film sur la première surface du substrat de base 310 de manière à empêcher des corps étrangers d'être introduits dans le substrat de base 310, la première surface exposée vers l'extérieur.

7. Unité d'affichage selon la revendication 1, dans laquelle le substrat de base 310 inclut :
un substrat en verre ; et
une couche concavo-convexe 501 formée d'un élément moulant, ayant une surface fixée à un côté du substrat en verre, et ayant une autre surface sur laquelle une partie concavo-convexe ayant le motif concavo-convexe est formée.

8. Unité d'affichage tactile selon la revendication 7, dans laquelle le substrat en verre a des rainures formées sur une autre surface du substrat en verre correspondant au motif concavo-convexe, et
dans laquelle des rainures formées sur une autre surface du substrat en verre sont formées pour avoir une profondeur nano-dimensionnée et un diamètre nano-dimensionné.

9. Unité d'affichage tactile selon la revendication 1, dans laquelle la couche d'électrode inclut :
une seconde électrode 322 formée sur le panneau d'affichage, et configurée pour détecter le toucher d'un utilisateur conjointement avec la première électrode.

10. Procédé de fabrication d'une unité d'affichage tactile, le procédé comprenant :
la formation d'un nano-masque ayant un diamètre nano-dimensionné sur une surface d'un substrat en verre ;
la gravure de ladite une surface du substrat en verre par le nano-masque, en formant de ce fait une structure concavo-convexe incluant une pluralité de rainures ;
le retrait du nano-masque ayant le diamètre nano-dimensionné ; et
la formation d'une couche d'électrode 321' sur ladite une surface du substrat en verre incluant la pluralité de rainures, et
dans lequel l'étape de formation d'une couche d'électrode inclut :
la fixation du substrat en verre avec un angle d'inclinaison prédéfini, en fonction d'une direction de référence ; et
la formation d'une couche d'électrode sur une surface du substrat en verre, en fournissant du gaz au substrat en verre dans la direction de référence.

11. Procédé selon la revendication 10, dans lequel l'étape de formation d'un nano-masque ayant un diamètre nano-dimensionné inclut :
la formation d'une couche métallique sur une surface du substrat en verre ; et
l'application de chaleur sur le substrat en verre où la couche métallique a été formée, en collant la couche métallique, en formant de ce fait un nano-masque ayant un diamètre nano-dimensionné composé de pièces métalliques.

12. Procédé selon la revendication 11, comprenant en outre :
le dépôt d'un élément moulant sur un verre protecteur ;
l'agencement du substrat en verre sur l'élément moulant de sorte qu'une surface du substrat en verre fasse face au verre protecteur ;
la pression du substrat de base de sorte qu'une structure concavo-convexe soit formée au niveau de l'élément moulant par les rainures ; et
le retrait du substrat de base.

13. Procédé selon la revendication 10, comprenant en outre :
la formation d'une couche métallique sur une autre surface du substrat en verre ;
l'application de chaleur sur le substrat en verre où la couche métallique a été formée, en collant de ce fait la couche métallique ; et
la formation d'une pluralité de rainures sur une autre surface du substrat en verre, en utilisant une pluralité de pièces métalliques collées par la chaleur, comme un masque.

14. Procédé selon la revendication 13, comprenant en outre la formation d'un film sur une autre surface du substrat en verre, de manière à empêcher des corps étrangers d'être introduits dans le substrat en verre.
